# EUROPEAN PATENT APPLICATION

(11) **EP 4 837 725 A2**
(43) Date of publication of application: **11.11.2026**
(21) Application number: 26172915.6
(22) Date of filing: 16.04.2026
(51) Int. Cl.: B29C 64/118, B29C 64/209, B29C 64/336, B33Y 10/00, B33Y 30/00

(54) **METHOD AND 3D PRINTER FOR THE LAYER-BY-LAYER PRODUCTION OF A DOUBLE-WALLED OBJECT**

(30) Priority: 16.04.2025 NL 2040203; 16.04.2025 NL 2040202
(71) Applicant: Kuypers Kunststoftechniek BV, 5527 LC Hapert (NL)
(72) Inventor: KUYPERS, Ron, Hapert (NL)
(74) Representative: Verhees, Godefridus Josephus Maria

(57) **Abstract**

A print head (31) of a 3D printer for the layer-by-layer forming of an object has three nozzles (3, 13, 33) which are connected to extruders. Two nozzles (13) and (33) are present at a fixed distance from each other and print an inner wall (41) and an outer wall (43) during the formation of a wall. The extruder with nozzle (3) is located between both nozzles (13) and (33) when viewed in the direction of travel of print head (39) and is movable in print head (31) in a direction (16) perpendicular to the direction of travel (39). During the movement of print head (31) in the direction of travel (39), the nozzle (3) makes a back-and-forth movement in the direction of arrow (16), so that a zigzag-shaped connecting wall (45) forms between the inner and outer walls (41) and (43), which forms a whole with walls (41) and (43).

## Description

### Technical field of the invention

The invention relates to a method for the layer-by-layer production of a double-walled object using a 3D printer comprising a print head equipped with at least three nozzles, each equipped with an outlet from which material to be printed flows out during operation in an outlet direction, where the nozzles are movable relative to one another in a direction perpendicular to the outlet direction.

### Background of the invention

A method as referred to in the preamble of claim 1 is known from DE102019120328A1. When printing an object, the print head is moved along the contour of the object to be formed. For example, when printing a multi-walled object, the print head is moved along the contour of the wall and simultaneously prints the partitions, including an outer wall, an inner wall, and a partition wall.

### Summary of the invention

An object of the invention is to provide a method of the kind described in the introduction by which a solid-walled object can be printed efficiently. To this end, the method of the invention is characterized by the fact that, while printing a layer, the print head is moved and the first nozzle is moved in a direction perpendicular to the direction of movement. This allows a double-walled object to be printed layer by layer in which the walls are connected to each other by spacers.

Preferably, the first nozzle is positioned between the second and third nozzles with regard to the direction of movement of the print head, and is moved alternately during printing from the second nozzle to the third nozzle and from the third nozzle to the second nozzle.

The invention also relates to a 3D printer for the layer-by-layer forming of an object according to the method described above, which 3D printer comprises a print head, as well as displacement means for moving the print head, which print head comprises three nozzles, each of which is provided with an outlet from which material to be printed flows during operation in an outlet direction, the second nozzle and the third nozzle being situated at a fixed distance from each other, and which print head comprises further displacement means for moving the first nozzle in a direction perpendicular to the outlet direction.

Such a 3D printer is also known from DE102019120328A1. In this case, the nozzles are situated on arms that are rotatably connected to one another. By rotating the arms, the distance between the nozzles is changed in a direction perpendicular to the direction of displacement of the print head.

A further object of the invention is to provide a 3D printer of the kind described in the preamble of claim 3 with which several walls can be printed simultaneously more easily. For this purpose the 3D printer according to the invention, is characterized in that the further displacement means enable the first nozzle to move in a direction perpendicular to the direction of displacement of the print head. This is particularly advantageous when printing a double-walled object, where the walls are connected to each other by means of connecting pieces for the sake of strength. Immediately after forming both walls, the movable nozzle can, for example, make a zigzag movement between the two walls and thus form connecting pieces between the two walls.

Preferably, the print head of the 3D printer has at least three extruders equipped with a transport screw, one of which extruders is connected to each nozzle, each of which extruders is provided with an input opening and an output opening, the output opening being connected to the respective nozzle.

The invention further relates to a print head for a 3D printer according to the invention for the layer-by-layer forming of an object, comprising a nozzle equipped with an outlet for the material to be printed, and an extruder equipped with a screw conveyor for feeding the material to be printed to the nozzle under pressure, which extruder is equipped with an input opening and an output opening for the material to be printed, which output opening is connected to the nozzle.

If it is desired to print more material per unit of time, it is customary to increase the pressure in the extruder by, for example, making the extruding spindle rotate faster or by using an extruder with larger dimensions.

A further object of the invention is to provide a print head of the kind described in the preamble of claim 5 with which a 3D printer with higher capacity can be realized in a more economical manner. To this end, the print head according to the invention is characterized in that the print head comprises at least one further extruder, equipped with a further transport screw, which is provided with a further input opening and a further output opening, where the further output opening of the further extruder is also connected to the nozzle.

Instead of enlarging the extruder or increasing the pressure in the extruder, the capacity of the 3D printer according to the invention is increased by applying an additional extruder. This efficiently increases the capacity.

It should be noted that the application of such a print head is not limited to the 3D printer described above but can also be applied in any other 3D printer that differs from the 3D printer described above.

The output openings of the extruders can be connected to the nozzle via a flexible hose, whereby during printing the extruders are positioned stationary and the nozzle is moved. Preferably, however, a design of the 3D printer according to the invention is characterized by the fact that the nozzle and the extruders form part of a print head which can be moved by the displacement means.

### Brief description of the drawings

The invention will be further elucidated below on the basis of drawings. These drawings show embodiments of the 3D printer and the print head according to the present invention. In the drawings:
Figure 1 shows a schematic representation of a first design of the print head equipped with three nozzles;
Figure 2 shows the print head shown in Figure 1 as seen from above during the printing of a wall;
Figure 3 shows a schematic representation of a 3D printer equipped with the print head shown in Figures 1 and 2;
Figure 4 shows a second design of the print head according to the invention;
Figure 5 shows a second design of the 3D printer according to the invention equipped with the print head shown in Figure 4; and
Figure 6 shows a third design of the 3D printer according to the invention.

### Detailed description of the drawings

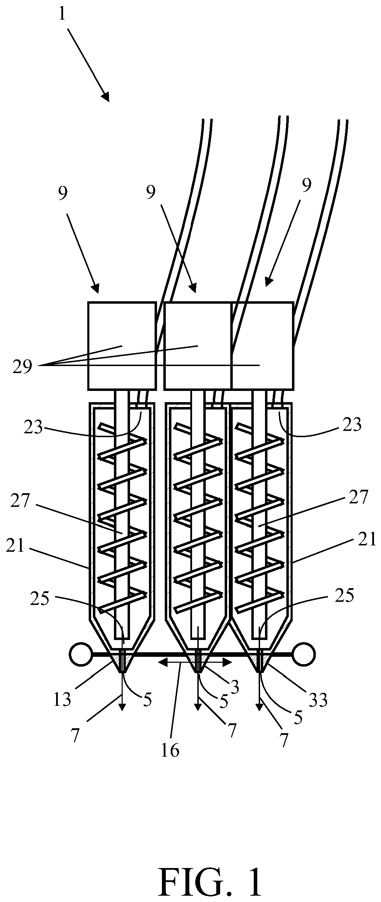

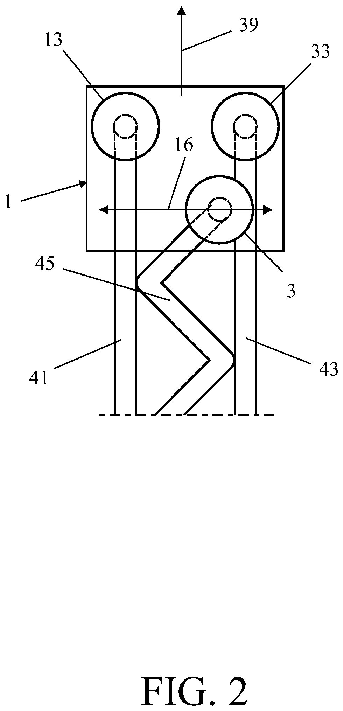

Figure 1 schematically depicts a first embodiment of the print head according to the invention. The print head 1 has three extruders 9 and three nozzles 3, 13, and 33. Each extruder 9 is equipped with a housing 21 containing an input opening 23 and an output opening 25, where the output opening 25 is connected to the respective nozzle 3, 13, and 33, respectively. Inside the housing 21 is a transport screw 27 to force the material to be printed out of the output opening under pressure. These transport screws 27 are driven by an electric motor 29 located above the housing 21. The nozzles 3, 13, and 33 are equipped with outlets 5 through which material to be printed flows out during operation in an outlet direction 7. Two of the three nozzles 13 and 33 are positioned at a fixed distance from each other, and the other nozzle 3 is located, viewed in the direction of travel of printhead 1, between the aforementioned two nozzles 13 and 33. During printing, the material to be printed flows out of nozzles 3, 13, and 33 via outlets 5 in parallel outlet directions 7. Nozzle 3 is movable in a direction 16 perpendicular to the outlet direction 7 and perpendicular to the direction of travel 39 of printhead 31; see also Figure 2.

Figure 2 schematically shows print head 1 in a top view during the printing of a double wall. The extruders with the nozzles 13 and 33 attached to them are spaced at a fixed distance from each other and print an inner wall 41 and an outer wall 43. The extruder with nozzle 3 is located between both nozzles 13 and 33 when viewed in the direction of travel 39 of the print head 31 and is movable in the print head 31 in a direction 16 perpendicular to the direction of travel 39 (the means of movement for this nozzle with extruder are not shown in the figure). During the movement of the print head 1, nozzle 3 makes a back-and-forth movement so that a zigzag-shaped connecting wall 45 is formed between the inner and outer walls 41 and 43, which forms a whole with these walls.

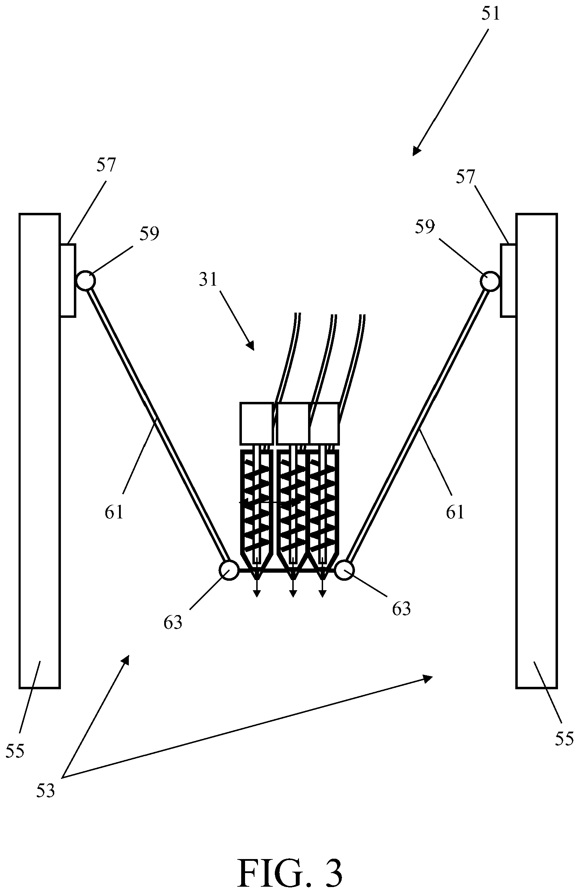

Figure 3 schematically shows an embodiment of the 3D printer in accordance with the invention, equipped with the print head shown in Figure 1. The 3D printer 51 is equipped with the print head 1 shown in Figure 1 and also has a center of displacement 53 for moving the print head 1 in the x,y,z direction. The displacement device 53 has four columns 55 along which carriages 57 can be moved. Each carriage 57 is connected via a ball joint 59 to an arm 61 which is connected via a further ball joint 63 to the print head 1.

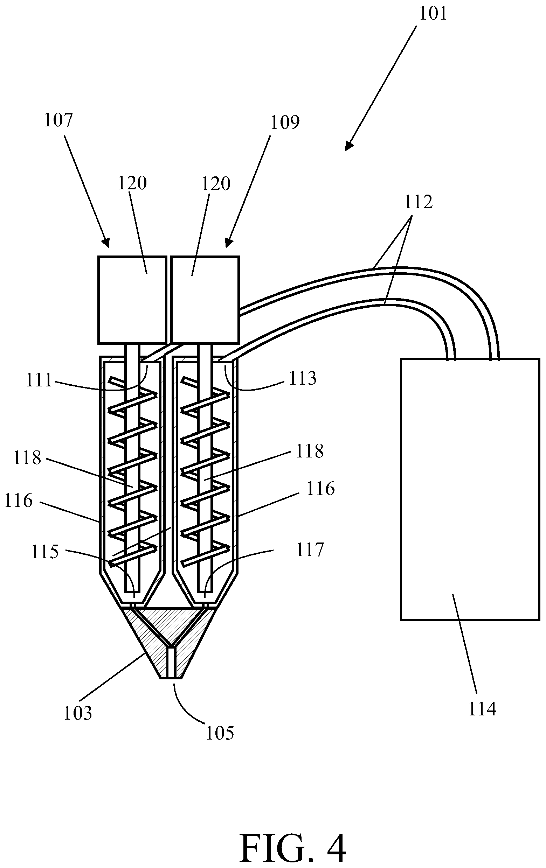

Figure 4 shows a second embodiment of the print head according to the invention. This print head 101 has a nozzle 103 which is equipped with an outlet 105 for the material to be printed. The print head 101 also has two extruders 107 and 109 for feeding the material to be printed under pressure to nozzle 103. Extruders 107 and 109 are each equipped with an input opening 111 and 113 and an output opening 115 and 117 for the material to be printed. The output openings 115 and 117 are connected to the nozzle 103.

Flexible pipes 112 are connected to input openings 111 and 113, through which the material to be printed is fed into the extruders 107 and 109. The flexible pipes 112 are connected to a container 114 for the material to be printed. The container 114 contains means (for example, a piston movable within the container) for feeding the material to be printed into the extruders 107 and 109 via flexible pipes 112. The extruders 107 and 109 each have a housing 116 in which a transport screw 118 is rotatably present. The transport screws 118 are each connected at one end to a motor 120.

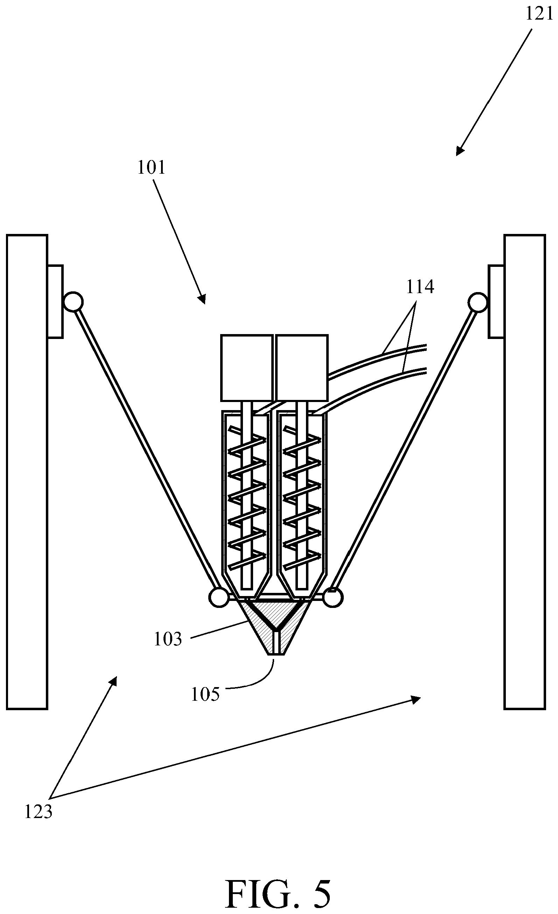

Figure 5 shows a second embodiment of the 3D printer 121 according to the invention. The 3D printer 121 is equipped with the print head 101 shown in Figure 4. The print head 101 is connected to means of movement 123 for moving the print head 101 in both horizontal and vertical directions.

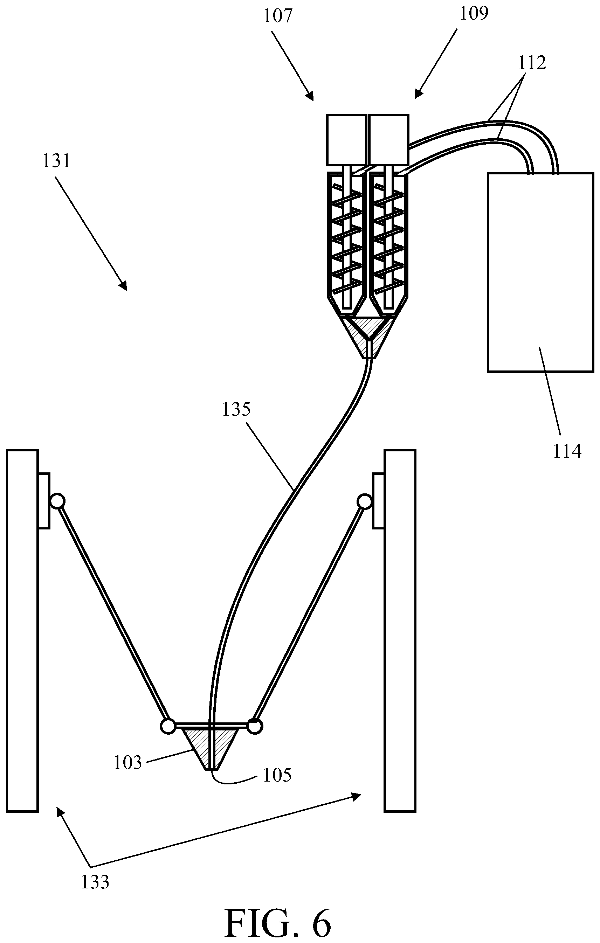

Figure 6 shows a third embodiment of the 3D printer 131 according to the invention. All parts identical to the embodiment shown in Figure 5 are indicated by the same reference numbers. In this 3D printer 131, nozzle 103 is connected to the displacement means 133. The outlet 105 in nozzle 103 is connected via a hose 135 to the outlets of the extruders 107 and 109. The extruders 107 and 109 are stationary and are connected via the flexible pipes 112 to a container 114.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. Method for the layer-by-layer production of a double-walled object using a 3D printer (51) comprising a print head (1; 31) equipped with at least three nozzles (3, 13, 33) each equipped with an outflow opening (5) from which material to be printed flows out during operation in an outflow direction (7), where the nozzles (3, 13, 33) are movable relative to one another in a direction (16) perpendicular to the outflow direction (7), **characterized in that** during the printing of a layer the print head (1; 31) is moved and the first nozzle (3) is moved in a direction (16) perpendicular to the direction of movement (39).

2. Method according to claim 1, **characterized in that** the first nozzle (3) viewed in the direction of travel (39) of the print head (31) is situated between the second and third nozzles (13, 33) and is alternately moved during printing from the second nozzle (13) to the third nozzle (33) and from the third nozzle (33) to the second nozzle (13).

3. 3D printer (51) for forming an object layer by layer, which 3D printer (51) comprises a print head (1; 31), as well as a displacement means (53) for moving the print head (1; 31), which print head (1; 31) comprises three nozzles (3, 13, 33), each of which is provided with an outflow opening (5) from which material to be printed flows during operation in an outflow direction (7), where the second nozzle (13) and the third nozzle (33) are located at a fixed distance from each other, and which print head comprises further displacement means for moving the first nozzle (3) in a direction (16) perpendicular to the outflow direction (7), **characterized in that** the further displacement means can move the first nozzle (3) in a direction (16) perpendicular to the direction of displacement of the print head (1; 31).

4. 3D printer (51) according to claim 3, **characterized in that** the print head (1; 31) comprising at least three extruders (9) equipped with a transport screw, one of which is connected to each nozzle (3, 13, 33), each of which extruders (9) is equipped with an input opening (23) and an output opening (25), the output opening (25) being connected to the respective nozzle (3, 13, 33).

5. Print head (101) for a 3D printer according to claim 3 or 4 for the layer-by-layer forming of an object, comprising a nozzle (103) equipped with an outlet (105) for the material to be printed, and an extruder (107) equipped with a screw conveyor for feeding the material to be printed under pressure to the nozzle (103), which extruder (107) is equipped with an input opening (111) and an output opening (115) for the material to be printed, which output opening (115) is connected to the nozzle (103), **characterized in that** the print head (101) comprises at least one further extruder (109) equipped with a further transport screw, which is provided with a further input opening (113) and a further output opening (117), where the further output opening (117) of the further extruder (109) is also connected to the nozzle (103).
